(19)

Europäisches
Patentamt
European
Patent Office
Office européen
des brevets

(11)  **EP 2 551 715 A1**

(12)  **EUROPEAN PATENT APPLICATION**

(43) Date of publication:
**30.01.2013 Bulletin 2013/05**

(51) Int Cl.:
**G02B 26/06** (2006.01)    **G02B 26/08** (2006.01)
**G02B 27/28** (2006.01)

(21) Application number: **12178392.2**

(22) Date of filing: **27.07.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.07.2011 IT TO20110683**

(71) Applicant: **Selex Sistemi Integrati S.p.A.
Roma (IT)**

(72) Inventors:
• **Bovino, Fabio Antonio
00131 ROMA (IT)**
• **Braccini, Matteo
00131 ROMA (IT)**

(74) Representative: **Jorio, Paolo et al
Studio Torta S.p.A.
Via Viotti, 9
10121 Torino (IT)**

(54)  **Height-adjustable phase plate for generating optical vortices**

(57)    A phase plate including a plurality of surfaces (24) arranged around a symmetry axis (H) to reflect an incident electromagnetic field $(E_1)$ having a null orbital angular momentum, thereby generating a reflected electromagnetic field $(E_2)$ having an orbital angular momentum. The surfaces (24) are arranged such that, with respect to a cylindrical reference system in which the azimuthal coordinate is measured in a plane perpendicular to the symmetry axis (H), the respective heights define a non-monotonic azimuthal profile, so that the reflected electromagnetic field forms an optical vortex whose topological charge is not associated one-to-one to the orbital angular momentum.

FIG. 2

Printed by Jouve, 75001 PARIS (FR)

EP 2 551 715 A1

**Description**

The present invention relates to a height-adjustable phase plate for generating optical vortices.

As is known, given an electromagnetic field in space, the location of the points in space where the electromagnetic field has null amplitude defines a so-called phase singularity, also known as phase dislocation. By way of example, various types of phase dislocation are known, such as, for example, screw dislocation, edge dislocation or mixed screw-edge dislocation.

Electromagnetic vortices, also known as so-called optical vortices, are also known. In general, the electromagnetic field defines an optical vortex when it has a dot-like phase singularity, around which the phase of the electromagnetic field itself is wrapped, creating a structure with helical phase fronts. Furthermore, the presence of one or more optical vortices is indicative of the fact that the electromagnetic field defines a location of points in space where it has null amplitude, around which the electromagnetic field assumes a circular symmetry. Therefore, in the case where it defines at least one optical vortex, the electromagnetic field belongs to the category of helical beams, which have a phase profile, or rather a spatial phase distribution, having an angular dependence of the type exp[in$\theta$], where $\theta$ is an azimuth coordinate and n is a positive or negative integer. For example, the so-called Laguerre-Gauss modes and Bessel-Gauss modes belong to the helical beams category.

That having been said, given an optical vortex defined by the electromagnetic field, this can be characterized by a respective topological charge Q, which is given by the number of revolutions made by the phase of the electromagnetic field around the phase singularity. In other words, indicating the phase of the electromagnetic field as $\phi$, gives:

$$Q = \frac{1}{2\pi} \oint d\phi \qquad\qquad (1)$$

The topological charge is a quantity that can be an integer and can have a positive or negative sign, depending on the phase's direction of circulation.

A non-null angular momentum can be associated with optical vortices, or rather with the corresponding electromagnetic fields that define them.

In particular, it is known that the angular momentum of a generic electromagnetic field is defined as r X $\pi$, where r indicates a position vector measured from an origin (for example, centred on a singularity), while n indicates the intensity vector, also known as the Poynting vector. In addition, it is known that it is possible to distinguish two components of angular momentum: a spin angular momentum (SAM), which depends on the polarization of the electromagnetic field, and an orbital angular momentum (OAM), which depends on a transverse distribution of the intensity vector.

In general, each photon of an electromagnetic field with circular polarization has a spin angular momentum alternatively equal to $\pm\hbar$. Furthermore, each photon of an electromagnetic field belonging to the helical beam category, therefore defining a corresponding optical vortex, has a non-null orbital angular momentum per photon. In practice, the presence of a non-null orbital angular momentum implies that the Poynting vector of the corresponding electromagnetic field rotates around the optical vortex; in fact, it is found that it is the azimuthal component of the Poynting vector that generates the component of the orbital angular momentum directed along the propagation path.

Nowadays, electromagnetic fields having non-null orbital angular momentum find application in numerous sectors. In particular, electromagnetic fields having non-null orbital angular momentum can be used to transmit information, which can be encoded precisely by using different values of orbital angular momentum.

Numerous techniques have been proposed in order to generate these electromagnetic fields. In particular, it is known to make use of so-called spiral phase plates (SPP).

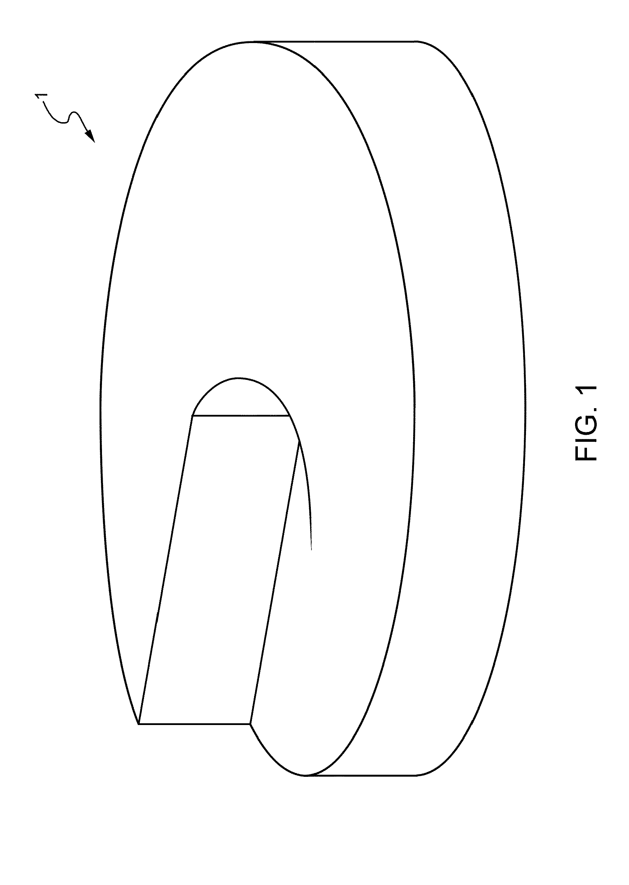

A spiral phase plate, known for short as an SPP, is an optical device made of a transparent material and having a central axis, the thickness of which is constant in the radial direction, but increases in proportion to the azimuthal angle $\theta$ in a substantially continuous manner. By way of example, an SPP is shown in Figure 1, where it is indicated by reference numeral 1.

Operationally, the SPPs work in transmission. In detail, when a light beam passes through the SPP 1, each ray of the light beam travels over an optical path, the length of which linearly depends on its azimuth coordinate. Therefore, when an electromagnetic field passes through it, the SPP 1 impresses a helical phase profile on the electromagnetic field, thus generating an optical vortex.

In greater detail, the SPP 1 enables generating an electromagnetic field having a quite specific topological charge. The SPP 1 therefore has the disadvantage of not allowing the topological charge to be changed. To overcome this drawback, SPPs of the type described in "Adaptive helical mirror for generation of optical phase singularity", by D. P. Ghai, APPLIED OPTICS, Vol. 47, No. 10, 1/04/2008, have been proposed, i.e. SPPs working in reflection mode and such as to allow changing the topological charge of the reflected electromagnetic field. These SPPs therefore lend themselves to applications where it is planned to encode information in the topological charge, or rather applications where the information is encoded by using different topological charge values.

In even greater detail, the SPP described in "Adaptive helical mirror for generation of optical phase singularity", by D. P. Ghai, APPLIED OPTICS, Vol. 47, No. 10, 1/04/2008, which shall henceforth be referred to as the reflective plate for the sake of brevity, has a constant thickness and is coupled to a piezoelectric actuator able to bend the reflective plate in a continuous manner, so as to define a continuous helical surface. The helical surface is able to receive a first electromagnetic field and generate a second electromagnetic field by reflection, which defines an optical vortex having a topological charge that depends on the difference in height of the helical surface, i.e. on the maximum height difference between any two points of the helical surface. In practice, by means of the piezoelectric actuator, it is possible to change, within certain limits, the difference in height of the helical surface, and therefore it is possible to change the topological charge of the second electromagnetic field.

The reflective plate thus lends itself to numerous applications, in particular in the field of data transmission. However, the reflective plate does not allow information to be encoded by using the topological charge and the orbital angular momentum in an independent manner, i.e. as two independent degrees of freedom. In fact, once the piezoelectric actuator has bent the reflective plate so that the corresponding helical surface has a maximum difference in height equal to $d_{max}$, it is found that the orbital angular momentum associated with a photon of the second electromagnetic field is inevitably equal to $(d_{max}/\lambda)^*\hbar$, wherein $\lambda$ is the wavelength of the first electromagnetic field.

Patent applications US2006/198038 and DE 10 2008 009600 also describe faceted mirrors, namely mirrors each formed by a plurality of reflective surfaces, the arrangement of which is controlled by actuators.

The object of the present invention is to provide a phase plate that at least partially resolves the drawbacks of the known art.

According to the invention, a phase plate, an optical vortex generator, an optical set-up and a method for generating an electromagnetic field are provided, as respectively defined in the appended claims.

For a better understanding of the invention, some embodiments will now be described, purely by way of non-limitative example and with reference to the attached drawings, where:

- Figure 1 shows a perspective view of an SPP of known type;
- Figure 2 schematically shows a perspective view of an optical vortex generator including the present phase plate;
- Figure 3 schematically shows a top view of a portion of the generator shown in Figure 2;
- Figures 4-6 and 8 show corresponding tables in which each row is formed by three elements, the third element qualitatively showing an azimuthal profile assumed by the present phase plate and the first and second elements respectively showing the spatial profiles of the phase and intensity (far field) of an electromagnetic field reflected by the present phase plate, when the latter assumes the azimuthal profile shown in the corresponding third element; the ordinate axes of the third column of Figure 5's table have different scales;
- Figure 7 shows a corresponding table in which each row is formed by two elements that respectively show, in a qualitative manner, the spatial profiles of the phase and intensity (far field) of an electromagnetic field reflected by the present phase plate;
- Figure 9 shows a corresponding table in which each row is formed one element that shows, in a qualitative manner, a corresponding spatial profile of the intensity (far field) of an electromagnetic field reflected by the present phase plate; and
- Figure 10 shows a block diagram of an optical set-up including the present phase plate.

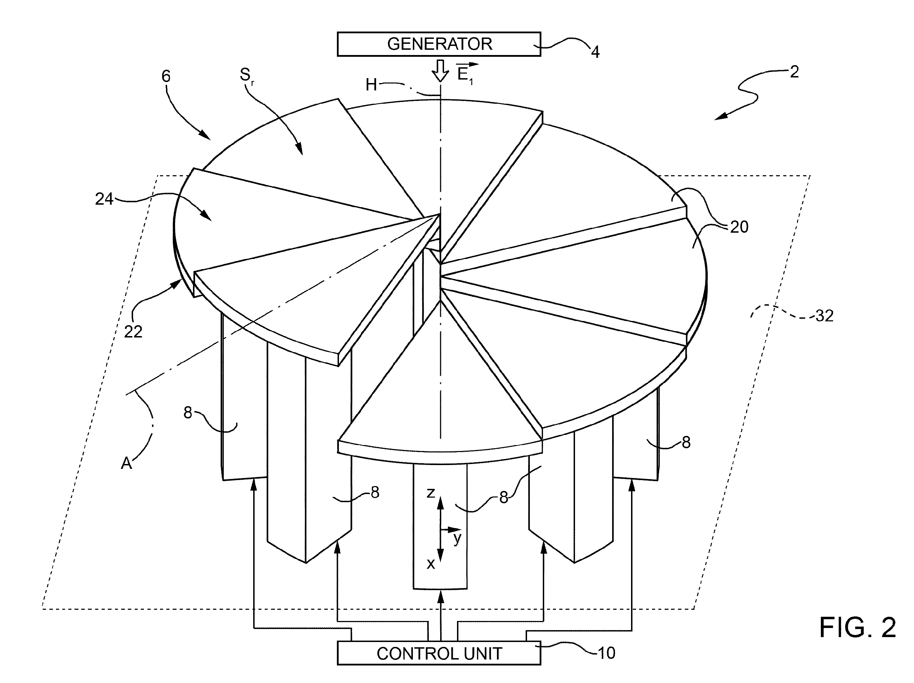

Figure 2 shows an optical vortex generator 2, which comprises an electromagnetic field generator 4, a phase plate 6, a plurality of actuators 8 and a control unit 10.

In detail, the electromagnetic field generator 4 generates a first electromagnetic field **E₁** with wavelength $\lambda$ and any type of polarization, but with null orbital angular momentum. Purely by way of example, the wavelength $\lambda$ could be 830 nm.

The phase plate 6 comprises a plurality of elementary units 20, arranged around a symmetry axis H and made of a conducting material such as, for example, silver or gold. In addition, the number of actuators 8, which, for example are of the piezoelectric type, is equal to the number of elementary units 20.

Each elementary unit 20 is mechanically coupled to a corresponding actuator 8. In particular, under the action of the corresponding actuator 8, as described further on, each elementary unit 20 is mobile parallel to the symmetry axis H.

In greater detail, the elementary units 20 are identical to one another. Furthermore, assuming a Cartesian reference system formed by three orthogonal axes x, y and z, and assuming arranging the phase plate 6 such that the symmetry axis H lies along the z-axis, each elementary unit 20 has the shape of a cylindrical segment, i.e. of a prism with a circular sector base, the height h of which (measured along the z-axis) is parallel to the symmetry axis H; therefore, each elementary unit 20 has a lower surface 22 and an upper surface 24, each of which has precisely the shape of a circular sector and is parallel to the xy plane.

In still greater detail, the vertices of the lower surfaces 22 and the upper surfaces 24 of the elementary units 20 lie along the symmetry axis H. Furthermore, by indicating the number elementary units 20 as N, the lower surface 22 and the upper surface 24 of any elementary unit 20 have a respective angle at the centre of 2n/N.

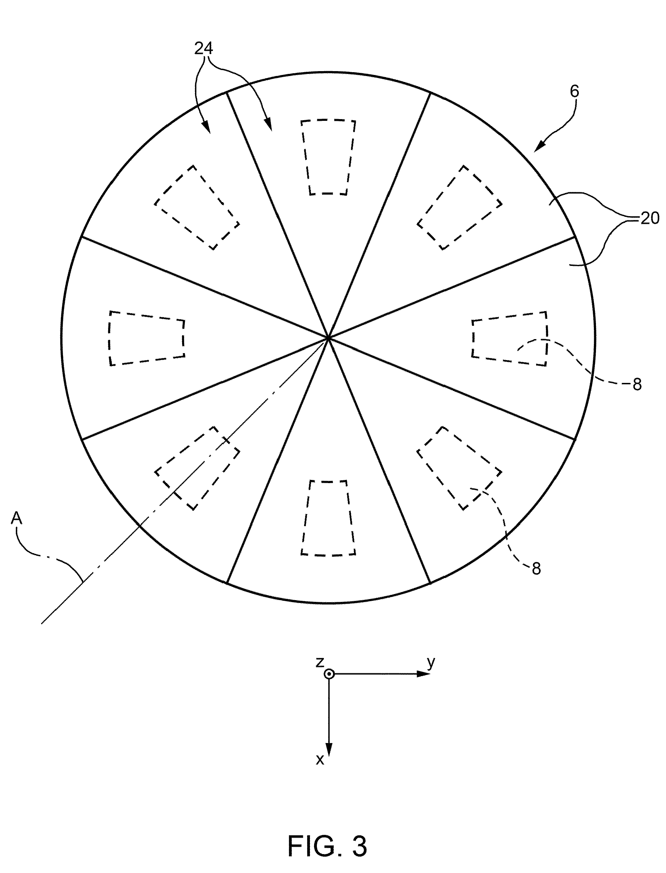

Pairs of adjacent elementary units are angularly set apart at an angle of 2n/N, such that, as shown in Figure 3, the phase plate 6 has the shape, when viewed from above, of a circle with a diameter equal to, for example, 2 cm, and in any case always less than 3 cm.

In practice, it is possible to assume an integer index j ranging between 1 and N to individually indicate the elementary units 20. In addition, it is possible to assume a cylindrical reference system centred at the origin of the Cartesian reference system xyz and such that the azimuth coordinate $\theta$ lies on the xy plane and is null in the direction parallel to the x-axis.

A corresponding azimuth coordinate $\theta_j$ can therefore be associated with each elementary unit 20, equal, for example, to the azimuth coordinate of the bisector A of the corresponding upper surface 24. In addition, it is possible to assume that the phase plate 6 is rotated in a manner such that the bisector $A_1$ of the elementary unit 20 identified by index j=1 forms a null angle with the x-axis. In other words, it is possible to rotate the helical plate 20 so that the elementary units identified by indices j=1 and j=N have (discretized) azimuth coordinates $\theta_1$ and $\theta_N$ equal to 0 and $(N-1)*2\Pi/N$, respectively.

That having been said, each elementary unit 20, as previously mentioned, is movable under the action of the corresponding actuator 8. In other words, the elementary units 20, and therefore also the upper surfaces 24, are adjustable in height (measured along the z-axis).

In detail, each actuator 8 is arranged beneath the lower surface 22 of the corresponding elementary unit 20. More specifically, each actuator 8 carries a corresponding elementary unit 20, in order to control its position.

In greater detail, the actuators 8 rest on a support surface 32 and are electrically connected to the electronic control unit 10. In a manner in itself known, the electronic control unit 10 is able to send a corresponding electrical control signal to each actuator 8, on the basis of which the actuator 30 modifies its shape, moving the corresponding elementary unit 20 in consequence, so that it reaches a desired height. The electronic control unit 10 is in turn controllable, in a manner which is in itself known, by an external user.

Each elementary unit 20 is mobile, under the action of the corresponding actuator 8, independently of the other elementary units 20. Therefore, under the action of the corresponding actuator 8, each elementary unit 20 can move with respect to the other elementary units, in both directions along a path parallel to the symmetry axis H.

More specifically, the vertices of the lower surfaces 22 and the upper surfaces 24 of the elementary units 20b are constrained to move along the symmetry axis H; in addition, the elementary units 20 can be constrained so as to prevent rotation around the symmetry axis H. Therefore, when viewed from above, the shape of the phase plate 6 does not vary as the positions of the elementary units 20 change.

Taken as a whole, the upper surfaces 24 form a reflective surface $S_r$, the shape of which is electronically controllable by the electronic control unit 10, through the actuators 8.

As shown by way of example in Figure 2, the electronic control unit 10 can control the actuators 8 so that the elementary units 20 are arranged in a manner that forms a flight of steps. In particular, the elementary units 20 can be vertically arranged in a manner such that the upper surface 24 of the j-th elementary unit 20 is at height $h_j$, where:

$$h_j = h_1 + (j-1)*\Delta \tag{2}$$

where $h_1$ can, for example, be equal to the above-mentioned height h of the elementary units 20, in which case it is found that the phase plate 6 is arranged such that the lower surface 22 of the elementary unit identified by index j=$_1$ lies on the xy plane. Instead, with regard to factor $\Delta$, this indicates the difference between the heights of the upper surfaces of two adjacent elementary units, except for the elementary units indexed by indices j=$_1$ and j=$_N$ (described further on); the difference between the heights of two adjacent elementary units is therefore constant. Furthermore, in the embodiment shown in Figure 2, it can be seen that $\Delta$=h, resulting in the absence of gaps between the elementary units 20; however, it is still possible to have $\Delta \neq$h. Instead, with regard to the upper surfaces of the elementary units indexed by indices j=$_1$ and j=$_N$, the difference in height between them is equal to $(N-1)*\Delta$.

In practice, equation (2) provides the z coordinate of the upper surface 24 of the j-th elementary unit 20, in the Cartesian reference system x,y,z. Furthermore, the height of the upper surface 24 of each elementary unit 20 is directly proportional to the azimuth coordinate of the elementary unit. In particular, the minimum height $h_{min}=h_1$ is related to the upper surface of the elementary unit having the minimum azimuth coordinate ($\theta_1$=0), while the maximum height $h_{max}$ is related to the upper surface of the elementary unit having the maximum azimuth coordinate ($\theta_N=2_\Pi/N*[N-1]$). In this embodiment, the heights of the upper surfaces 24 therefore depend linearly on the azimuth coordinate $\theta$, in a discrete manner.

In other words, it is possible to adjust the heights of the upper surfaces 24 of the elementary units 20 so that, assuming the minimum height $h_{min}=h_1$ for reference purposes, the height of the upper surface of the j-th elementary unit is equal to:

$$z\left(\vartheta_j\right) \propto \lambda Q \frac{\vartheta_j}{2\pi}$$ 
(3)

where $\theta_N$ tends to approximate to $2n$ as the number of elementary units 20 grows.

The elementary units 20 can therefore be arranged in a manner such that the reflective surface $S_r$ is a stepped helical surface, i.e. a surface, the height (z coordinate) of which: i) is constant in the radial direction and ii) grows, in a discrete manner, as the azimuth coordinate θ increases, preferably in a linear manner. Furthermore, between any two points of the reflective surface $S_r$ there is difference in height at the most equal to (N-1)*Δ, this last quantity defining the difference in height $D_{tot}$ of the reflective surface $S_r$. The symmetry axis H defines the axis of this stepped helical surface.

Operationally, assuming that the electromagnetic field generator 4 generates the first electromagnetic field $E_1$ so that it impinges on the reflective surface $S_r$ along a propagation path parallel to the symmetry axis H (preferably, coincident with the symmetry axis H), the reflective surface $S_r$ reflects the first electromagnetic field $E_1$, generating a second electromagnetic field $E_2$, that is propagated substantially along the same propagation path of the first electromagnetic field $E_1$, but in the opposite direction.

In greater detail, it can be assumed that the first electromagnetic field $E_1$ has the form of a Gaussian beam, and therefore that the electric field associated with it can be expressed as:

$$E_1 \propto e^{\frac{r^2}{w_0^2}}$$ 
(4)

where r is the radial coordinate of the above-mentioned cylindrical reference system and $w_0$ is the spot size of the Gaussian beam.

The first electromagnetic field $E_1$ is therefore subjected to reflection by the reflective surface $S_r$, with a phase shift that depends on the azimuth coordinate θ. In other words, each spatial contribution, that is each portion, of the first electromagnetic field $E_1$ is reflected with a phase shift that depends on its azimuth coordinate, but not on the radial coordinate.

Assuming that the elementary units 20 are arranged precisely in a manner such that the reflective surface $S_r$ is a stepped helical surface, the electric field associated with the second electromagnetic field $E_2$ can be expressed as:

$$E_2 \propto e^{\frac{r^2}{w_0^2}} e^{iQ\vartheta}$$ 
(5)

The second electromagnetic field $E_2$ consequently has a helical phase profile, thus defining an optical vortex and, in particular, an optical vortex having a topological charge Q. In detail, the topological charge Q of the optical vortex defined by the second electromagnetic field $E_2$ is equal to:

$$Q = 2 \cdot \frac{D_{tot}}{\lambda}$$ 
(6)

where $D_{tot}$ can be set to an even value, λ/2 for example, so as to obtain a unitary topological charge. Always by way of example, $D_{tot}$ can be set to an even value of an integer multiple of the wavelength λ/2, in which case the topological charge is an integer, but not unitary. Alternatively, $D_{tot}$ could be set to a non-integer multiple of the wavelength λ/2, in which case the topological charge is not an integer. The factor of two in equation (6) is due to the fact that the phase plate 6 works in reflection.

The phase plate 6 therefore enables the topological charge Q of the second electromagnetic field $E_2$ to be electronically modified, for the same wavelength $\lambda$ of the first electromagnetic field $E_1$, by varying the difference in height $D_{tot}$ of the reflective surface $S_r$ of the phase plate 6.

Furthermore, it can to verified that an orbital angular momentum equal to $\pm Q*h$ is associated with each photon of the second electromagnetic field $E_2$, where the sign depends on the direction of the helical surface (rising in the clockwise or anticlockwise direction) and which can therefore be changed by controlling the heights of the upper surfaces 24 so as to invert the direction of the helical surface. It is also found that, if $D_{tot}$ is an integer multiple of half of the wavelength $\lambda$, as the number of elementary units 20 grow, the second electromagnetic field $E_2$ increasingly approximates to the spatial profile of a Laguerre-Gauss mode with a null radius index and an azimuthal index equal to the topological charge.

Since the elementary units 20 are made of a conducting material, the phase plate 6 behaves substantially in the described manner for any value of the wavelength $\lambda$ of the first electromagnetic field $E_1$. Nevertheless, different embodiments are possible, wherein the elementary units are formed at least in part by a dielectric material and have a height h such that they can reflect at least 90% of the first electromagnetic field $E_1$. In other words, in these embodiments, the elementary units form dielectric mirrors, such as Bragg lattices for example.

Similar results can be obtained by grouping elementary units into a number of groups, each of which is formed by adjacent elementary units, the heights of which are same, and with the groups being arranged azimuthally such that the reflective surface $S_r$ is a stepped helical surface. In this case, there is only a difference in height between the upper surfaces of elementary units belonging to different groups, as, considering a generic group, the upper surfaces of the elementary units that form the group are all at the same height, so as to define a flat group surface. Furthermore, assuming an index jg=1,...,G to identify the groups and indicating the height of the group surface of the jg-th group as $h_{jg}$, the height $h_{jg}$ grows as the group's azimuth coordinate increases, it being possible to define the latter in a manner similar to that described with regard to the elementary units.

That having been said, it is also possible to adjust the heights of the elementary units 20 so that the upper surfaces 24, and consequently the reflective surface $S_r$, azimuthally assume a sawtooth profile and, in particular, a profile comprising a number P of periods with a sawtooth waveform. In this way, it is possible to obtain high topological charge values without having to resort to a high difference in height $D_{tot}$.

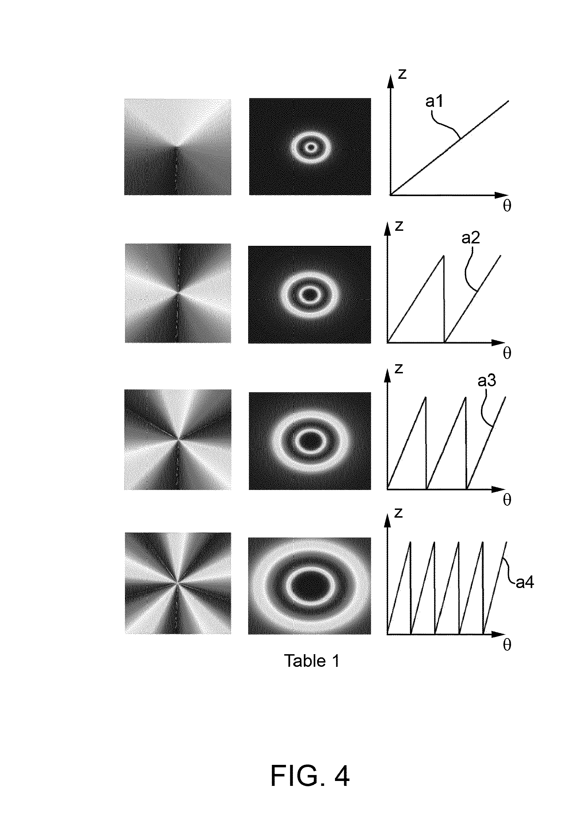

In detail, as qualitatively shown (i.e. with reference to an ideally continuous reflective surface, formed by an infinite number of elementary units) in the third column of Table 1, specified in Figure 4, the heights of the upper surfaces 24 can be such that the reflective surface $S_r$ assumes a profile formed by a succession of P pairs identical to each other, each pair being formed by a rising ramp having a certain inclination and by a falling ramp having an infinite slope. In this regard, rows 1-4 of Table 1 relate to the cases where P=1, P=2, P=3 and P=4, respectively. The first row of Table 1 thus refers to the case of a single helical ramp, already described in the foregoing and shown in Figure 2. In addition, the first and second columns of Table 1 qualitatively show the spatial profiles of the phase and the intensity, respectively, of the second electromagnetic field $E_2$. For completeness, it should also be noted that Table 1, as well as the subsequently described tables, have been calculated assuming the number of elementary units to be three hundred and sixty.

Each rising ramp is defined by a corresponding number (equal to N/P, in the absence of groups) of upper surfaces of elementary units and has an overall difference in height, equal to $\lambda/2$ for example, so as to azimuthally exert a phase shift of 2n on the second electromagnetic field $E_2$. The difference in height $D_{tot}$ of the reflective surface $S_r$ is therefore equal to half of the wavelength $\lambda$ of the first electromagnetic field $E_1$.

Even more specifically, considering a single rising ramp, the height of the upper surface of the j-th elementary unit is equal to:

$$z\left(\vartheta_j\right) = \frac{\lambda}{2} \cdot \frac{\vartheta_j}{\alpha} \tag{7}$$

where $\alpha$ is equal to $2\pi/P$ and j ranges from 1 to N/P.

The reflective surface $S_r$ therefore defines a number of phase discontinuities equal to the number P of sawtooth periods. Furthermore, each period has an overall difference in height equal to $\lambda/2$.

In these conditions, it is possible to verify that the second electromagnetic field $E_2$ has a topological charge Q equal to the number of sawtooth periods P and that the orbital angular momentum OAM associated with each photon of the second electromagnetic field $E_2$ is equal to $\pm Q*h$, where the sign depends on the direction of the rising ramps and can therefore be changed by reversing this direction, i.e. by generating a sawtooth profile with azimuthally falling ramps.

Summarizing, when indicating the azimuthal profiles of the reflective surface $S_r$ as a1-a4, it is found that:

- when the reflective surface $S_r$ assumes azimuthal profile a1, Q=1 and OAM=1;
- when the reflective surface $S_r$ assumes azimuthal profile a2, Q=2 and OAM=2;
- when the reflective surface $S_r$ assumes azimuthal profile a3, Q=3 and OAM=3; and
- when the reflective surface $S_r$ assumes azimuthal profile a4, Q=5 and OAM=5.

Furthermore, for each of the azimuthal profiles a1-a4 of the reflective surface $S_r$, it is found that, as shown in the second column of Table 1, the intensity of the second electromagnetic field $\mathbf{E_2}$ assumes a circular symmetry in space.

It is also possible to set the topological charge of the optical vortex defined by the second electromagnetic field $E_2$ and the orbital angular momentum associated with each photon of the second electromagnetic field $\mathbf{E_2}$ independently of each other.

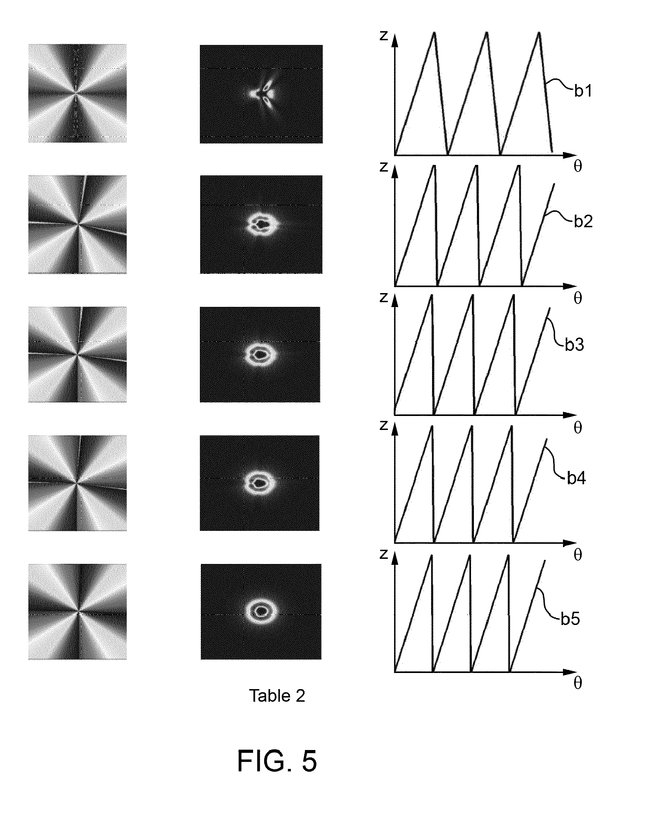

In this regard, as shown in Table 2, specified in Figure 5, and in the third column of Table 2 in particular, it is possible for the electronic control unit 10 to control the actuators 8 so that the reflective surface $S_r$ assumes an azimuthal profile formed by a corresponding number P of periods with a triangular waveform. Each period is formed by a respective rising ramp and by a respective falling ramp; in the case where one of the rising ramp and the falling ramp has an infinite slope, a sawtooth profile is once more obtained.

More in detail, each rising ramp and falling ramp are defined by corresponding sets of upper surfaces of elementary units. By way of example, the azimuthal profiles shown in Table 2 and respectively indicated as b1-b5 are such that the slope of the rising ramps remains unchanged, while the slope of the falling ramps increases, until it becomes infinite in the case of azimuthal profile b5. Azimuthal profile b5 is therefore a sawtooth profile again.

More specifically, indicating the slope of the falling ramps as m, the azimuthal profiles b1-b5 are obtained for m=3, m=20, m=30, m=40 and m=100, respectively.

Operationally, it is possible to verify that, in the cases of azimuthal profiles b1-b5, the second electromagnetic field $\mathbf{E_2}$ defines an optical vortex having a topological charge Q equal to four; to that end, although not shown in Table 2, the differences in height of profiles bl-b5 are different from each other. Furthermore, each photon of the second electromagnetic field $\mathbf{E_2}$ has an orbital angular momentum equal to OAM=0.5, OAM=2.23, OAM=3.1, OAM=3.52 and OAM=3.99, respectively. In practice, as the slope of the falling ramps grows, the orbital angular momentum asymptotically tends to the value of the topological charge.

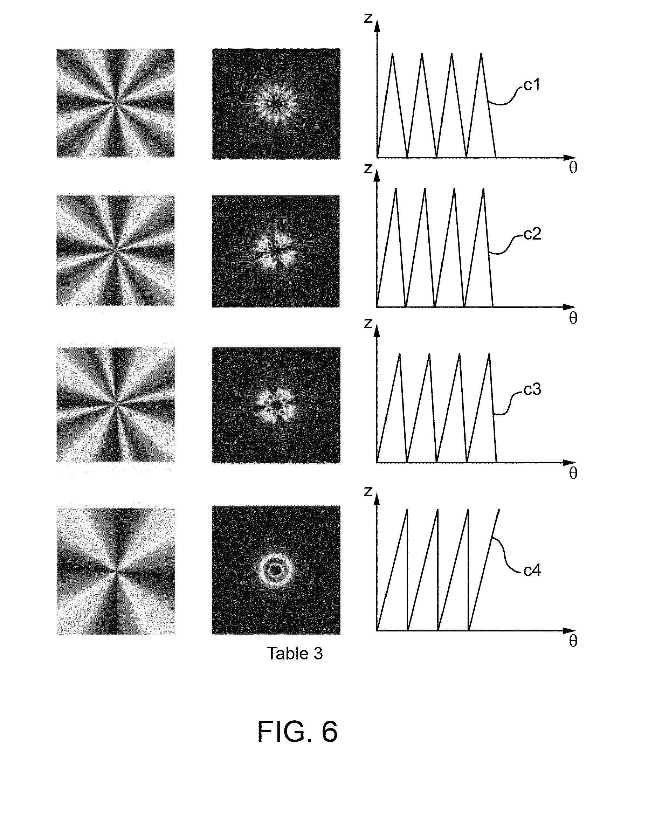

As shown in Table 3, specified in Figure 6, and in the third column of Table 3 in particular, it is also possible for the reflective surface $S_r$ to assume an azimuthal profile formed by a number P of periods still with a triangular waveform. However, it is possible to keep the number of periods P unchanged (in the case in point, equal to four), by changing the slopes of the rising and falling ramps. In particular, the azimuthal profiles c1-c4 specified in Table 3 refer to cases where the slope m of the falling ramp is equal to m=1, m=2, m=3 and m=128, respectively; the slope of the rising ramp varies in consequence, so as to keep the number P of periods unchanged.

It is possible to verify that, when the reflective surface $S_r$ assumes azimuthal profiles c1-c4, the orbital angular momentum OAM associated with the photons of the second electromagnetic field $\mathbf{E_2}$ is equal to OAM=0, OAM=0.7, OAM=1.3 and OAM=4, respectively. Instead, the topological charge Q is always equal to the number P of periods, i.e. it remains equal to four.

Thanks to the phase plate 6, it is therefore possible to set a desired value of orbital angular momentum, in a manner independent of the topological charge value. Furthermore, as shown in the second column of Table 2 for example, the second electromagnetic field $E_2$ has a spatial intensity profile that varies as the profile of the reflective surface $S_r$ changes, and so a spatial profile that can be used to encode information and that can, among other things, be set in a manner independent of the value of the orbital angular momentum.

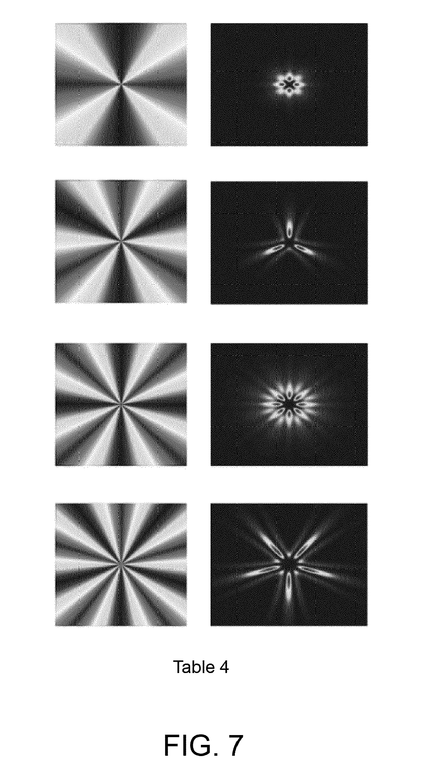

With regard to this, it is possible to impose, for example, that the reflective surface $S_r$ has an azimuthal profile with a symmetrical triangular waveform, so that the orbital angular momentum is null, and then change the spatial profile of the second electromagnetic field $E_2$, by varying the number P of periods of symmetrical triangular waves that form the azimuthal profile of the reflective surface $S_r$. Table 4, specified in Figure 7, refers precisely to this situation; in addition, the four rows of Table 4 refer to the cases where P=2, P=3, P=4 and P=5, respectively.

As can be deduced from the second column of Table 4, the spatial profiles assumed by the second electromagnetic field $E_2$ are symmetrical and each has a respective number of lobes. In particular, in cases where the number of periods P is even, the corresponding spatial profiles each have a number of lobes equal to 2*P; instead, in cases where the number of periods P is odd, the corresponding spatial profiles each have a number of lobes equal to P. The number of lobes of the spatial profile of the second electromagnetic field $E_2$ is therefore a parameter controllable by means of the phase plate 6, for example, to encode information in the spatial profile itself.

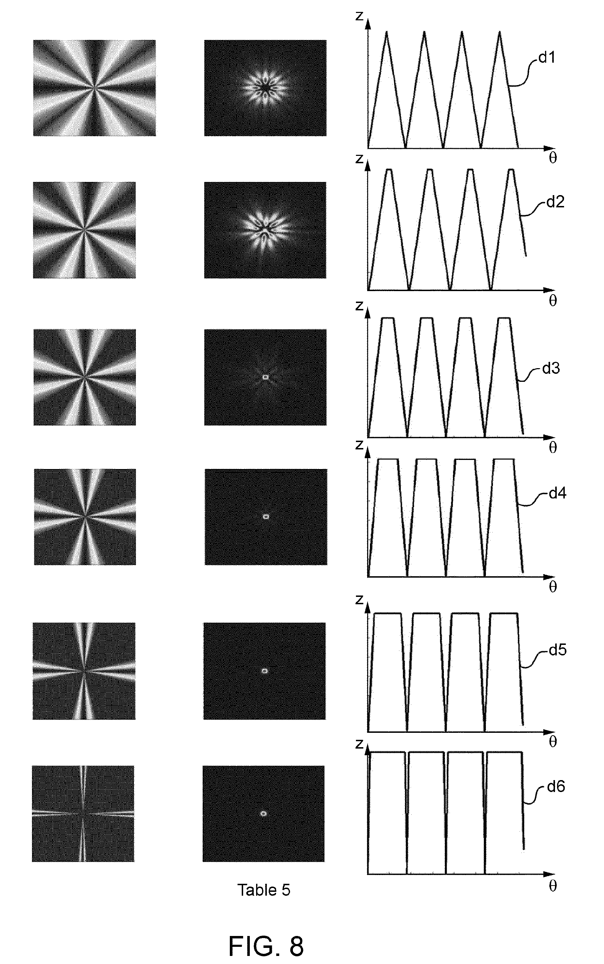

As shown in Table 5, specified in Figure 8, and in the third column of Table 5 in particular, it is also possible to adjust the heights of the elementary units 20 so that the reflective surface $S_r$ assumes a still different azimuthal profile such as, for example, an azimuthal profile including a number P of periods of a trapezoidal wave. In this case, if the trapezoidal form is isosceles, as is precisely the case in Table 5, the orbital angular momentum is null.

In detail, indicating the ratio between the bases of a period of the trapezoidal wave as r and the modulus of the slope of the sides of this period as m, the six rows of Table 5 refer, respectively, to the azimuthal profiles d1-d6, which have, respectively: r=0, m=2; r=0.1, m=2.2; r=0.3, m=2.8; r=0.5, m=3.9; r=0.7, m =6.42 and r=0.9, m=18. Furthermore, the six rows of Table 5 all refer to the case where the topological charge Q of the optical vortex defined by the second electromagnetic field $E_2$ is equal to four.

Still by way of example, by opportunely grouping the elementary units 20, it is possible to adjust the heights of the elementary units 20 so that the reflective surface $S_r$ assumes a square wave profile.

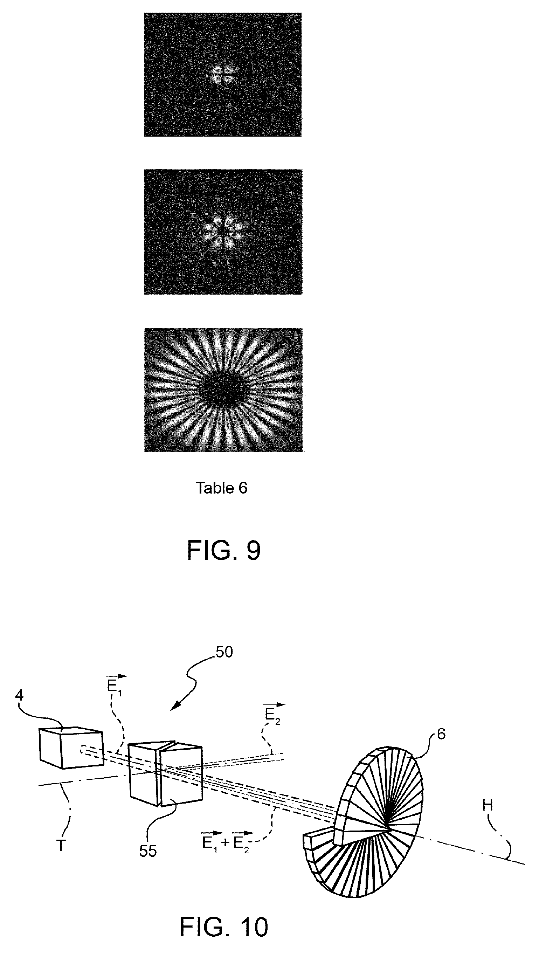

In particular, it is possible to impose that the upper surfaces of the elementary units of each mutually contiguous group are all set to the same group height. Furthermore, the group heights of the so-defined groups are such as to define a portion of the square waveform, i.e. each group can alternatively have a first or a second group height. By way of example, table 6, specified in Figure 9 refers precisely to the cases where the azimuthal profile of the reflective surface $S_r$ includes a number P of periods of square waves equal to two, four and sixteen, respectively.

As can be noted from table 6, the second electromagnetic field $E_2$ has a spatial profile that defines a number of lobes equal to 2*P. In addition, both the orbital angular momentum and the topological charge are null.

In general, it can thus be concluded that the phase plate 6 can be controlled in a way such that the heights of the upper surfaces 24 assume a (discrete) azimuthal profile having any shape, provided that it is non-monotonic. In this way, the orbital angular momentum is uncoupled from the topological charge.

In greater detail, it is possible arrange the phase plate 6 such that the heights of the upper surfaces 24 define a non-monotonic azimuthal profile, formed by one or more rising portions and by one or more falling portions. An azimuthal slope profile, formed by N-1 values, corresponds to this azimuthal height profile, as for each pair of heights related to two adjacent upper surfaces there exists a corresponding slope value, equal to the ratio between the difference in heights of the pair and the angular distance between the two adjacent upper surfaces, this angular distance being equal to 2n/N. In other words, the azimuthal slope profile is equal to the derivate of the azimuthal height profile, calculated along the azimuth coordinate.

As the azimuthal height profile is non-monotonic, the azimuthal slope profile assumes both positive and negative values; for example, in the case of an azimuthal height profile with a triangular wave, the corresponding azimuthal slope profile assumes the form of a square wave. In practice, a portion of the azimuthal slope profile with positive values corresponds to each rising portion of the azimuthal height profile; similarly, a portion of the azimuthal slope profile with negative values corresponds to each falling portion of the azimuthal height profile.

That having been said, the orbital angular momentum of the second electromagnetic field $E_2$ is equal to the difference between the summation of the slopes that form the positive-value portions of the azimuthal slope profile and the summation of the slopes that form the negative-value portions of the azimuthal slope profile.

It is therefore possible, for example, to choose a desired orbital angular momentum and arrange the upper surfaces 24 such that the above-mentioned summation difference is equal to the desired orbital angular momentum.

As well as the desired orbital angular momentum, it is also possible to choose a desired topological charge, not associated one-to-one with the desired orbital angular momentum, and arrange the upper surfaces such that the second electromagnetic field $E_2$, as well as having the desired orbital angular momentum, defines an optical vortex having the desired topological charge. Even more specifically, the orbital angular momentum and the topological charge can be chosen arbitrarily.

Purely by way of example, it is therefore possible to choose a desired topological charge and a desired orbital angular momentum, and to arrange the upper surfaces 24 such that the azimuthal height profile they define has a waveform formed by a number of periods equal to the desired topological charge, each period of the azimuthal height profile having a difference in height equal to λ/2; in addition, the azimuthal height profile is such that the corresponding azimuthal slope profile is such that the difference between the summation of the slopes that form the positive-value portions of the azimuthal slope profile and the summation of the slopes that form the negative-value portions of the azimuthal slope profile is equal to the desired orbital angular momentum.

Figure 10 shows a possible optical system 50 able to render the second electromagnetic field $E_2$ usable from an operational standpoint.

The optical system 50 includes an optical beam splitter 55, for example, of the so-called 50/50 type with prisms, which is interposed between the electromagnetic field generator 4 and the phase plate 6. In use, a first fraction (approximately half) of the first electromagnetic field $E_1$ crosses the optical beam splitter 55 and impinges on the reflective surface $S_r$ of the phase plate 6; a second fraction (approximately half and not shown) of the first electromagnetic field $E_1$ is instead reflected by the optical beam splitter 55 along a transversal path T, orientated approximately 90° with respect to the symmetry axis H.

The phase plate 6 generates the second electromagnetic field $E_2$ through reflection of the first electromagnetic field $E_1$; the second electromagnetic field $E_2$ propagates, in turn, towards the optical beam splitter 55, where a fraction (approximately half) of it is reflected by the optical beam splitter 55 along the transversal path T, but in the opposite direction to that in which the second fraction of the first electromagnetic field $E_1$ was reflected. In practice, the optical system 50 thus allows spatially separating the first and the second electromagnetic fields $E_1$, $E_2$, rendering the second electromagnetic field $E_2$ usable, for example, by an electronic receiver.

From the foregoing description, the advantages that can be achieved with the present phase plate emerge clearly. In particular, the present phase plate enables the independent setting of the orbital angular momentum of the second electromagnetic field $E_2$ and the topological charge of an optical vortex defined by the same second electromagnetic field $E_2$, as well as setting a desired spatial profile for the second electromagnetic field $E_2$. In this way, the present phase plate lends itself to encoding information on one or more quantities among the orbital angular momentum, the topological charge and the spatial profile.

The present phase plate also enables inverting the sign of the orbital angular momentum of the second electromagnetic field $E_2$ without constraints due to hysteresis, as happens instead in the case of monolithic plates bent by an actuator.

Finally, it is clear that modifications and variations can be applied to the present phase plate described herein without leaving the scope of protection of the present invention.

For example, the elementary units 20 could have different heights from one another, while the actuators 8 could be of a different type from that described.

In addition, the heights of the elementary units could be adjusted in a different manner from that described. For example, in the case of triangular wave or sawtooth profiles, each period could have a difference in height that is a multiple of the wavelength $\lambda$ of the first electromagnetic field $E_1$.

**Claims**

1. A phase plate comprising a plurality of surfaces (24) arranged around a symmetry axis (H) to reflect an incident electromagnetic field ($E_1$) having a null orbital angular momentum, thereby generating a reflected electromagnetic field ($E_2$) having an orbital angular momentum; and wherein said surfaces (24) are arranged such that, with respect to a cylindrical reference system in which the azimuthal coordinate is measured in a plane perpendicular to the symmetry axis (H), the respective heights define a non-monotonic azimuthal profile, so that said reflected electromagnetic field forms an optical vortex whose topological charge is not associated one-to-one to said orbital angular momentum.

2. The phase plate according to claim 1, wherein an azimuthal slope profile corresponds to said azimuthal height profile, the azimuthal slope profile being formed by one or more positive-value portions and by one or more negative-value portions, said azimuthal slope profile being such that the difference between the summation of the positive slopes and the summation of the negative slopes is proportional to said orbital angular momentum.

3. The phase plate according to claim 1 or 2, wherein said surfaces (24) are flat and arranged perpendicularly with respect to said symmetry axis (H).

4. The phase plate according to claim 3, wherein the number of said surfaces (24) is equal to N, each surface having the shape of a circular sector with an angle at the centre equal to 2π/N and pairs of adjacent surfaces being angularly spaced apart by an angle equal to 2π/N.

5. The phase plate according to any of the preceding claims, wherein said surfaces (24) are made of an electrically conducting material.

6. The phase plate according to any of the preceding claims, wherein the azimuthal height profile has a shape chosen from: a discrete sawtooth wave, a discrete triangular wave, a discrete trapezoidal wave and a discrete square wave.

7. An optical vortex generator comprising a phase plate (6) according to any of the preceding claims and a plurality of electrically controllable actuators (8), each actuator being mechanically coupled to a corresponding surface (24) and being configured to move said corresponding surface parallel to the symmetry axis (H).

8. An optical vortex generator comprising a phase plate (6) according to any of claims 1 to 6 and an electromagnetic generator (4) configured to generate the incident electromagnetic field ($E_1$) so that it impinges on said plurality of surfaces (24) parallel to the symmetry axis (H).

9. An optical system comprising the optical vortex generator according to claim 7 or 8, and further including an optical beam splitter (55), which is interposed between the electromagnetic generator (4) and the phase plate (6), so as to receive, in use, both the incident electromagnetic field ($E_1$) and the reflected electromagnetic field, said optical beam splitter being further configured so as to direct a fraction of the incident electromagnetic field and a fraction of the reflected electromagnetic field in different manner.

10. A method for generating an electromagnetic field having an orbital angular momentum and forming an optical vortex having a topological charge, said method comprising the steps of:

- providing a phase plate (6) comprising a plurality of surfaces (24) to reflect electromagnetic radiation, the surfaces being arranged around a symmetry axis (H) and mobile parallel to the symmetry axis independently from one another; and
- arranging said surfaces (24) so that, with respect to a cylindrical reference system in which the azimuth coordinate is measured in a plane perpendicular to the symmetry axis (H), the respective heights define a non-monotonic azimuthal profile, so that said topological charge is not associated one-to-one to said orbital angular momentum.

11. The generation method according to claim 10, wherein said step of arranging said surfaces (24) comprises arranging the surfaces so that an azimuthal slope profile corresponds to the azimuthal height profile, the azimuthal slope profile being formed by one or more positive-value portions and by one or more negative-value portions, said azimuthal slope profile being such that the difference between the summation of the positive slopes and the summation of the negative slopes is proportional to said orbital angular momentum.

12. The generation method according to claim 10 or 11, further comprising the step of making an electromagnetic field ($E_1$) having null orbital angular momentum impinge on the surfaces (24) of the phase plate (6).

13. The generation method according to any of claims 9 to 12, in which said step of arranging said surfaces comprises arranging the surfaces (24) such that said azimuthal height profile has a shape chosen from: a discrete sawtooth wave, a discrete triangular wave, a discrete trapezoidal wave and a discrete square wave.

FIG. 1

EP 2 551 715 A1

FIG. 2

FIG. 3

Table 1

FIG. 4

Table 2

FIG. 5

Table 3

FIG. 6

Table 4

FIG. 7

Table 5

# FIG. 8

Table 6

FIG. 9

FIG. 10

Europäisches
Patentamt

European
Patent Office

Office européen
des brevets

# EUROPEAN SEARCH REPORT

Application Number

EP 12 17 8392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2005/275814 A1 (EIB NICHOLAS K [US] ET AL) 15 December 2005 (2005-12-15)<br>* abstract; figure 2- *<br>* paragraph [0035] - paragraph [0050] * | 1-6,8,9<br><br>7,10-13 | INV.<br>G02B26/06<br>G02B26/08<br>G02B27/28 |
| Y | HELMBRECHT, M.A.; ET AL.: "MEMS DM development at Iris AO, Inc.",<br>SPIE, PO BOX 10 BELLINGHAM WA 98227-0010, USA,<br>vol. 7931, 11 February 2011 (2011-02-11), pages 793108-1-793108-6, XP040554016,<br>* the whole document * | 7,10-13 | |
| X | TYSON R K ET AL: "Generation of an optical vortex with a segmented deformable mirror",<br>APPLIED OPTICS, OPTICAL SOCIETY OF AMERICA, WASHINGTON, DC; US,<br>vol. 47, no. 33,<br>20 November 2008 (2008-11-20), pages 6300-6306, XP001521202,<br>ISSN: 0003-6935, DOI: 10.1364/AO.47.006300<br>* the whole document * | 1-13 | |
| A,D | DEVINDE PAL GHAI ET AL: "Adaptive helical mirror for generation of optical phase singularity",<br>APPLIED OPTICS, OPTICAL SOCIETY OF AMERICA, WASHINGTON, DC; US,<br>vol. 47, no. 10, 1 April 2008 (2008-04-01), pages 1378-1383, XP001513112,<br>ISSN: 0003-6935, DOI: 10.1364/AO.47.001378<br>* the whole document * | 1-13 | TECHNICAL FIELDS SEARCHED (IPC)<br><br>G02B |
| A,D | US 2006/198038 A1 (BAEK SANG HYUNE [KR] ET AL) 7 September 2006 (2006-09-07)<br>* abstract; figures * | 1-13 | |

-/--

The present search report has been drawn up for all claims

| Place of search | Date of completion of the search | Examiner |
|---|---|---|
| Munich | 6 November 2012 | Windecker, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 12 17 8392

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2008 009600 A1 (ZEISS CARL SMT AG [DE]) 20 August 2009 (2009-08-20) * abstract * * paragraph [0055] - paragraph [0069] * ----- | 1-13 | |
| A | CARMEL ROTSCHILD ET AL: "Adjustable Spiral Phase Plate", APPLIED OPTICS, vol. 43, no. 12, 1 January 2004 (2004-01-01), page 2397, XP055018019, ISSN: 0003-6935, DOI: 10.1364/AO.43.002397 * abstract * ----- | 1-13 | |
| A | Q. WANG ET AL: "Dynamic switching of optical vortices with dynamic gamma-correction liquid crystal spiral phase plate", OPTICS EXPRESS, vol. 13, no. 25, 1 January 2005 (2005-01-01), page 10285, XP055018022, ISSN: 1094-4087, DOI: 10.1364/OPEX.13.010285 * page 10288 - page 10289 * ----- | 1-13 | |
| A | S. H. TAO ET AL: "Dynamic optical manipulation with a higher-order fractional Bessel beam generated from a spatial light modulator", OPTICS LETTERS, vol. 28, no. 20, 15 October 2003 (2003-10-15), page 1867, XP055018027, ISSN: 0146-9592, DOI: 10.1364/OL.28.001867 * the whole document * ----- | 1-13 | |

TECHNICAL FIELDS
SEARCHED     (IPC)

-/--

The present search report has been drawn up for all claims

| Place of search | Date of completion of the search | Examiner |
|---|---|---|
| Munich | 6 November 2012 | Windecker, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

| | Europäisches Patentamt European Patent Office Office européen des brevets | **EUROPEAN SEARCH REPORT** | Application Number EP 12 17 8392 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUEDA K ET AL: "Laguerre-Gaussian beam generated with a multilevel spiral phase plate for high intensity laser pulses", OPTICS EXPRESS, OSA (OPTICAL SOCIETY OF AMERICA), WASHINGTON DC, (US), vol. 12, no. 15, 26 July 2004 (2004-07-26), pages 3548-3553, XP002997531, ISSN: 1094-4087, DOI: 10.1364/OPEX.12.003548 * abstract *<br><br>----- | 1-13 | |
| | | | TECHNICAL FIELDS SEARCHED (IPC) |

The present search report has been drawn up for all claims

| Place of search | Date of completion of the search | Examiner |
|---|---|---|
| Munich | 6 November 2012 | Windecker, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 17 8392

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2012

| Patent document cited in search report | Publication date | Patent family member(s) | | Publication date |
|---|---|---|---|---|
| US 2005275814 A1 | 15-12-2005 | US | 2005275814 A1 | 15-12-2005 |
| | | US | 2012038896 A1 | 16-02-2012 |
| US 2006198038 A1 | 07-09-2006 | US | 2006198038 A1 | 07-09-2006 |
| | | WO | 2006096594 A2 | 14-09-2006 |
| DE 102008009600 A1 | 20-08-2009 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006198038 A

- DE 102008009600

**Non-patent literature cited in the description**

- **D. P. GHAI.** Adaptive helical mirror for generation of optical phase singularity. *APPLIED OPTICS,* vol. 47 (10